(19) Europäisches Patentamt

European Patent Office

Office européen des brevets

(11) **EP 1 586 835 A2**

(12) **EUROPEAN PATENT APPLICATION**

(43) Date of publication:
**19.10.2005 Bulletin 2005/42**

(51) Int Cl.⁷: **F25B 41/06**, F16K 1/00

(21) Application number: **05007974.8**

(22) Date of filing: **12.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.04.2004 JP 2004117644**

(71) Applicant: **TGK COMPANY, LTD.**
**Tokyo 193-0942 (JP)**

(72) Inventor: **Hirota, Hisatoshi**
**Hachioji-shi Tokyo 193-0942 (JP)**

(74) Representative: **Grünecker, Kinkeldey,**
**Stockmair & Schwanhäusser Anwaltssozietät**
**Maximilianstrasse 58**
**80538 München (DE)**

(54) **Fluid control valve**

(57) A fluid control valve used as an expansion valve 1 has valve portions 22 and 23 integrally formed with a valve element 20 which is simultaneously movable relative to valve seats 12, 31. Flow passage cross-sections formed by gaps between the valve portion 22 and the valve seat 12, and between the valve portion 23 and the valve seat 31 have approximately the same sizes when the expansion valve is open. The influence of variations of the effective pressure-receiving areas of the valve elements when the expansion valve is open, on the pressure balance, is almost cancelled to prevent degradation of the accuracy of flow rate control dependent on the lift amount of the valve elements.

FIG. 2

EP 1 586 835 A2

## Description

The present invention relates to a fluid control valve according to the preamble of claim 1.

A solenoid valve known from JP 2002-372164 A is disposed in a flow passage and comprises a solenoid that actuates a valve element, and a valve mechanism that opens and closes the flow passage. The solenoid includes a solenoid coil, a fixed core, an axially movable plunger, as a movable core operating in unison with the valve element, and a spring that urges the plunger in the valve-opening direction or in the valve-closing direction when the solenoid coil is de-energized. The valve mechanism includes two ports formed in a body, a valve seat in a flow passage between the ports, and the valve element. The energization of the solenoid controls the lift amount of the valve element relative to the valve seat to adjust the flow rate. The valve element valve is controlled to move to a position where the fluid pressure, the urging spring force, and the electromagnetic force are balanced. However, when the lift amount of the valve element is increased, there occurs a phenomenon, according to which the area decreases at which the valve element actually receives pressure (effective pressure-receiving area). This decrease changes the lift amount and the pressure balance and results in degraded accuracy of flow rate control.

It is considered that the above problems occur not only in a solenoid valve which electromagnetically actuates the valve element but also in a fluid control valve which adjusts the lift amount of the valve element using only the balance between mechanical mechanisms, such as a spring, and the fluid pressure.

It is an object of the invention to provide a fluid control valve capable of preventing or suppressing degradation of the accuracy of flow rate control dependent on the valve element lift amount.

This object is achieved with the features of claim 1.

The term "fluid control valve" should include not only a solenoid valve which electromagnetically actuates a valve element but also a control valve which has the valve element thereof actuated by an internal mechanical constitution. The fluid control valve as well may be configured such that the first and second valve portions are seated on the first and second valve seats, respectively, in a manner engaged therewith, or that the first and second valve portions are slidably inserted into valve holes formed by the first and second valve seats, thereby closing the valve holes.

In the fluid control valve at least a part of the fluid pressure acting on valve element in the valve-opening direction is cancelled by the pressure-cancelling structure. Therefore, even a control valve with a simple construction can carry out control actions accurately over a large differential pressure range.

The first and second valve portions integrally formed with the valve element are configured such that they move approximately simultaneously to and away from the first and second valve seats, respectively. This cancels at least part of the influence of variations of the effective pressure-receiving areas in the lifted states of the respective valve portions, on the pressure balance.

Particularly, if a flow passage cross-section is formed by a gap between the first valve portion and the first valve seat and another flow passage cross-section is formed by a gap between the second valve portion and the second valve seat, both gaps are configured to have approximately the same sizes when the fluid control valve is open. Thus, it easily is possible to almost completely cancel the influence of variations of the effective pressure-receiving areas on the pressure balance.

Hence, it is possible to prevent or suppress a degradation of the accuracy of the flow rate control dependent on the lift amount of the valve element.

Embodiments of the invention will be described with reference to the drawings. In the drawings is:

Fig. 1    a cross-section of a first embodiment of a fluid control valve serving as an expansion valve in a piping body of a refrigeration cycle,

Fig. 2    a cross-section of a single unit of the expansion valve,

Fig. 3    an enlarged view of a valve element and its vicinity in Fig. 2,

Fig. 4    a cross-section of a second embodiment of the expansion valve,

Fig. 5    a cross-section of a third embodiment of the expansion valve,

Fig. 6    a section taken on line A-A of Fig. 5,

Fig. 7    a cross-section of a fourth embodiment of the expansion valve,

Fig. 8    an enlarged view of a valve main body of the expansion valve of Fig. 7,

Fig. 9    a cross-section of a fifth embodiment of the expansion valve, and

Fig. 10   a cross-section of a sixth embodiment of the expansion valve.

The following terms "upstream" and "downstream" are sometimes used with reference to the direction of flow of refrigerant (fluid) in a refrigeration cycle. The terms "upper" and "lower" are sometimes used in relation to the figures.

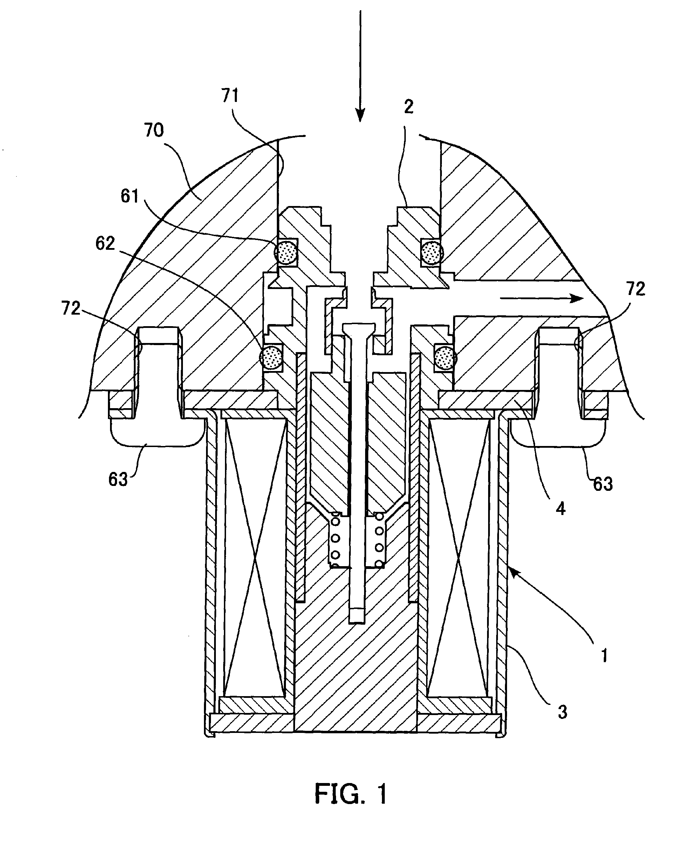

A fluid control valve in Figs 1, 2 and 3 is configured as an expansion valve (first embodiment) disposed in a refrigeration cycle for an automotive air conditioner.

The expansion valve 1 in Fig. 1 comprises a valve main body 2 inside of a piping body 70 defining a refrigerant passage 71. A solenoid 3 continuous with the valve main body 2 is exposed to the outside of the piping body 70. Interposed between the valve main body 2 and the solenoid 3 is an outwardly extending flanged plate 4 fixing the expansion valve 1 to the piping body 70.

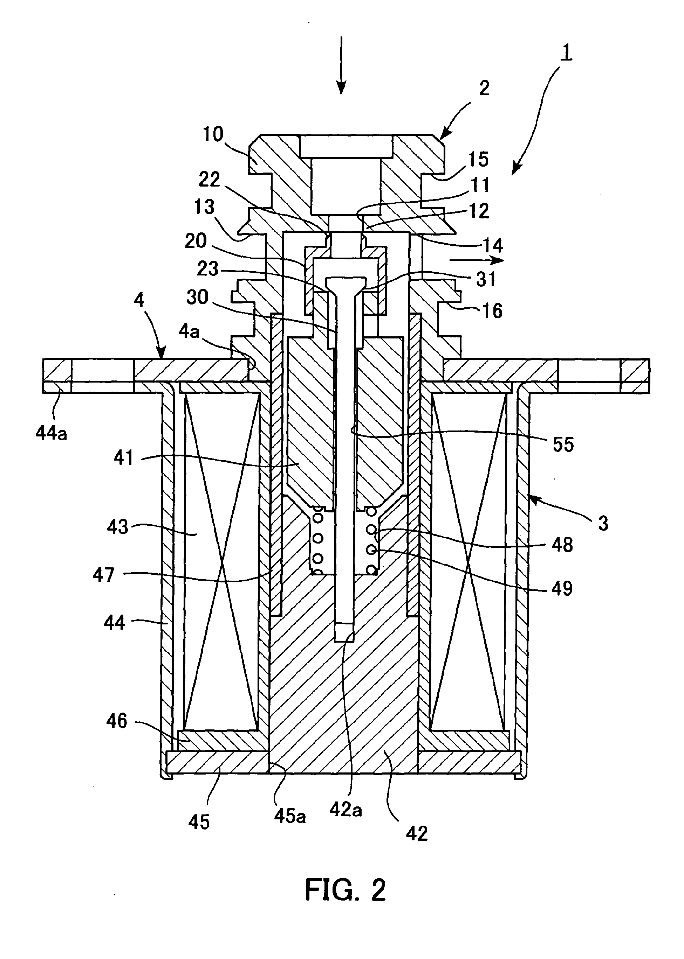

In Fig. 2, the valve main body 2 comprises a hollow cylindrical body 10 defining a refrigerant passage, a lineally movable hollow cylindrical valve element 20 within the body 10, and a long shaft-like member 30. The components form a valve mechanism.

The body 10 has an upstream portion valve hole 11 defined by a stepped portion which protrudes radially inward. A valve seat 12 (first valve seat) is formed by a lower peripheral edge of the valve hole 11. The body 10 has an outer circumferential passage groove 13 downstream of the valve seat 12, which provides a refrigerant passage. The passage groove 13 contains circumferentially distributed radial communication holes 14 for communicating the inside of the body 10 and the downstream side of the refrigerant passage 71 (see Fig. 1). The body 10 has fitting peripheral grooves 15 and 16 on both sides of the communication holes 14, for holding O-rings 61 and 62 (see Fig. 1). The lower end of the body 10 is press-fitted into a hole 4a in the centre of the plate 4.

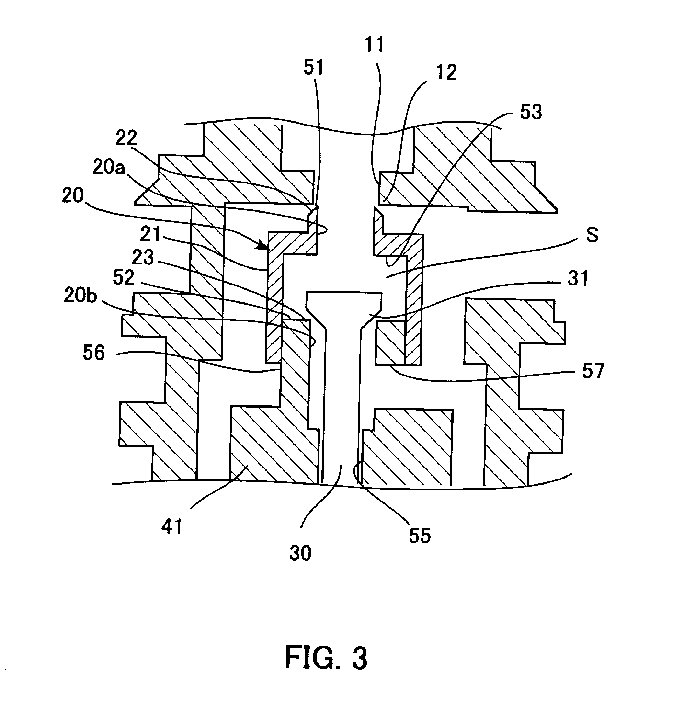

The valve element 20 in Fig. 3 is a hollow cylindrical body 21 fixed to the foremost end of a plunger 41 of the solenoid 3. The upper end of the valve element 20 facing the valve seat 12 is constricted and forms a refrigerant introduction passage 20a, the inner diameter of which is slightly smaller than the inner diameter of the valve hole 11. The foremost end of the constricted portion is formed with a valve portion 22 (first valve portion) of a tapered shape such that it can be removably seated on or partly in the valve seat 12. When the valve portion 22 is seated on the valve seat 12, the foremost end of the valve portion 22 penetrates into the valve hole 11 by a predetermined amount. The foremost end of the plunger 41 defines a delivery passage 20b. A valve portion 23 (second valve portion) is defined by an inner peripheral edge of a central hole of the foremost end of the plunger 41.

One end of the shaft-like member 30 is received in a space S (expanded-pipe portion) formed between the introduction passage 20a and the delivery passage 20b. The end of the shaft-like member 30 has a tapered shape with the outer diameter increasing toward the foremost end. This tapered portion forms a valve seat 31 (second valve seat) for the valve portion 23. The valve seat 31 is set to a location in such a relation to the valve element 20 that the two valve portions 22 and 23 can be simultaneously seated on the respective valve seats 12 and 31.

The valve element 20 has a pressure-cancelling structure. More specifically, a valve-opening pressure-receiving surface that receives pressure from the upstream side of high-pressure refrigerant in the space S is defined by a portion 51 of the upstream end face of the valve portion 22 which may partially enter into the valve hole 11 and by a portion 52 facing the space S in the vicinity of the valve portion 23. A valve-closing pressure-receiving surface that receives the pressure of the high-pressure refrigerant from the downstream side is defined by a downstream facing surface 53 between the introduction passage 20a and the space S. These surfaces cancel part of the pressure forces of the high-pressure refrigerant as applied to the valve element 20. The expansion valve 1 even operates reliably if the differential pressure between upstream and downstream is large.

The solenoid 3 in Fig. 2 includes the plunger 41 and a core 42 arranged along the axial direction in which the valve element 20 of the valve main body 2 opens and closes. A solenoid coil 43 supplied with electric current generates a magnetic circuit including the plunger 41 and the core 42. A yoke 44 covers the solenoid coil 43 and forms a casing of the solenoid 3.

The yoke 44 is a hollow cylinder with a radially outwardly flanged portion 44a on one end thereof. The yoke 44 is welded to the plate 4 at the flanged portion 44a. The other end of the yoke 44 is a plate 45 (metal disk), which is rigidly fixed to the yoke by caulking. The solenoid coil 43 is wound around a hollow cylindrical bobbin 46. A core 42 is disposed in a lower half of the bobbin 46. The lower end of the core 42 is press-fitted into a fitting hole 45a in the centre of the plate 45.

A sleeve 47 of a non-magnetic material is mounted inside the bobbin 46 and extends from the lower end of the body 10 to an upper end of the core 42. One end of the sleeve 47 is inserted into an expanded pipe portion of the lower end of the body 10, which portion is slightly increased in inner diameter. The other end of the sleeve 47 is fitted on a reduced-diameter portion of the upper end of the core 42, which is slightly reduced in diameter, and is disposed such that it covers a certain range of the axial motion of the plunger 41.

The core 42 is cylindrical and has a central upper blind hold 48 of a certain depth in the upper end. The blind hole 48 accommodates a compression coil spring 49 acting between the plunger 41 and the core 42 for urging the plunger 41 in a direction away from the core 42. The upper end of the core 42 is tapered outwardly from the peripheral edge of the blind hole 48.

The plunger 41 is cylindrical with an outer diameter slightly smaller than the inner diameter of the sleeve 47. An insertion hole 55 extends axially through the plunger 41. The shaft-like member 30 passes through the insertion hole 55 with a predetermined radial clearance. The lower end of the shaft-like member 30 is inserted into a fitting blind hole 42a in the bottom of the blind hole 48 of the core 42, and is fixed there.

A valve element-forming portion 56 in Fig. 3 of the upper end of the plunger 41 is having a hollow cylinder and communicates with the insertion hole 55. The valve portion 23 is formed by the peripheral edge of the foremost end-side opening of the valve element-forming portion 56. The valve element-forming portion 56 has an inner diameter larger than the insertion hole 55. A side wall of the portion 56 contains a communication hole 57 to the downstream side of the refrigerant passage 71. Refrigerant having passed through a gap between the valve portion 23 and the valve seat 31 flows downstream through the refrigerant passage formed inside the valve element-forming portion 56.

The lower end of the plunger 41 in Fig. 2 remote from the valve element-forming portion 56 forms a tapered portion complementary to the tapered portion of the core 42.

A body of the expansion valve 1 is formed by the body 10 of the valve main body 2 and the yoke 44 of the solenoid 3. The magnetic circuit of the solenoid 3 surrounding the solenoid coil 43 is formed by the plunger 41, the core 42, the plate 45, the yoke 44, the plate 4, and so forth.

Since the opposed surfaces of the plunger 41 and the core 42 are respectively tapered and sloped, there occurs a phenomenon of so-called magnetic leakage between both. This means that in the magnetic circuit, a component of the attracting force is generated in the radial direction perpendicular to the axial direction which would be the proper attracting direction. This magnetic leakage reduces the generated axial attractive force when the plunger 41 and the core 42 are close to each other. Inversely, when the plunger 41 and the core 42 are distant from each other, even if they are away from each other by the same distance, the shortest distance therebetween in the axial direction is reduced, which makes it possible to practically reduce the magnetic gap. Hence, it is possible to enhance the attractive force between the plunger 41 and the core 42 when they are distant from each other.

The configuration by which the two valve portions 22 and are seated simultaneously on their respective valve seats 12 and 31 can be realized e.g. as follows: First, the shaft-like member 30 is inserted into the insertion hole 55 of the plunger 41 from the direction of the valve element-forming portion 56. Then the valve element 20 is fixed to the valve element-forming portion 56 of the plunger 41 by press-fitting. Subsequently the plunger 41 is inserted into the sleeve 47. At this time, the foremost end of the shaft-like member 30 is positioned at the location of the fitting blind hole 42a of the core 42. Next, the body 10 is assembled to the solenoid 3 joined to the plate 4. At this time, the valve portion 22 is seated on the valve seat 12. The valve seat 31 of the shaft-like member 30 is away from the valve portion 23. Then, the expansion valve 1 is connected to the piping body 70 for use in testing, and the shaft-like member 30 is pressed into the fitting blind hole 42a with a predetermined tool, while fluid is caused to flow such that the differential pressure across the expansion valve 1 is held at a certain fixed pressure. At this time, the flow rate of the fluid on the downstream side is measured. When the measured flow rate has become approximately equal to zero (or not larger than a predetermined value), this is taken as proof that the valve portion 23 has been properly seated on the valve seat 31. Then the fitting motion of the shaft-like member 30 into the fitting blind hole 42a is stopped. Thus, the shaft-like member 30 remains fixed at the right location assuring that the two valve portions 22 and 23 will always be simultaneously seated on the respective valve seats 12 and 31.

In the first embodiment, the sizes and the shapes of the valve portions and the valve seats are set and configured such that flow passage cross-sections formed by gaps between the valve portion 22 and the valve seat 12, and between the valve portion 23 and the valve seat 31 have approximately the same sizes when the expansion valve 1 is open.

When the expansion valve 1 in Fig. 1 is inserted into the refrigerant passage 71 with the valve main body 2 first, screws 63 are inserted into insertion holes of the yoke 44 and of the plate 4, and are fastened in screw holes 72 in the piping body 70, until the expansion valve 1 is fixed to the piping body 70. The necessary airtightness between the expansion valve 1 and the piping body 70 is preserved by the O-rings 61 and 62. The expansion valve 1 does not need any casing or the like for the body 10, but the body 10 is directly fixed to the inside of the piping body 70.

When the solenoid coil 43 is de-energized, the plunger 41 is urged to the upstream direction by the compression coil spring 49. No attractive force is generated between the plunger 41 and the core 42. The valve portions 22 and 23 are seated on the valve seats 12 and 31, respectively. The expansion valve 1 is in a fully-closed state.

When an electric current i is supplied to the solenoid coil 43, an electromagnetic force of a magnitude dependent on the value of the electric current attracts the plunger 41 toward the core 42. The valve portions 22 and 23 are simultaneously moved away from the valve seats 12 and 31, and will stop at a certain location when the electromagnetic force and the load of the compression coil spring 49 are balanced. Predetermined flow passage cross-sections are open between the respective valve portions and the valve seats. When high-pressure refrigerant is introduced from upstream, the refrigerant undergoes adiabatic expansion through the gaps between the respective valve portions and the valve seats and is delivered downstream. A part of the refrigerant pressure forces applied to the valve element 20 and to the plunger 41 is cancelled by the above-mentioned pressure-cancelling structure.

Assumption: the inlet pressure introduced into the expansion valve 1 from upstream of the refrigerant passage 71 is P1. The outlet pressure of the refrigerant decompressed by passing through the gaps between the respective valve portions and the valve seats is P2. The effective pressure-receiving area of the valve portion 22 seated on the valve seat 12 (i.e. the flow passage cross-sectional area of the valve hole 11) is A. The effective pressure-receiving area of the valve portion 23 seated on the valve seat 31 (i.e. the flow passage cross-sectional area of the valve element-forming portion 56) is B. The electromagnetic force generated by the current i is f(i). The spring force of the compression coil spring 49, in the upstream direction is fs. The flow passage cross-sectional areas formed by the gaps between the respective valve portions and the valve seats is s(i). Then the relationship between forces in the upward direction and forces in the downward direction can be expressed by the following equation:

$$((A - s(i)) - (B - s(i)) \times (P1 - P2) =$$

$$fs - f(i) \qquad (1)$$

and the differential pressure across the expansion valve (P1 - P2) can be expressed by the following equation:

$$P1 - P2 = (fs - f(i))/(A - B) \qquad (2)$$

That is, the influence of the flow passage cross-sectional area s(i) which varies with the electric current i is eliminated. Further, in the right side of the equation (2), the parameters other than the electromagnetic force f(i) are substantially fixed values, and hence the differential pressure (P1 - P2) across the expansion valve 1 becomes a constant differential pressure proportional to the electric current i supplied to the solenoid coil 43. In short, the expansion valve 1 is configured as a differential pressure valve.

When the flow rate on the upstream side of the refrigeration cycle increases the inlet pressure P1 also will increase. The valve portions 22 and 23 are moved in valve-opening direction to increase the flow rate in order to hold the differential pressure (P1 - P2) constant.

When the flow rate of refrigerant on the upstream side of the refrigeration cycle decreases, the inlet pressure P1 will decrease as well. The valve portions 22 and 23 are moved in valve-closing direction to restrict the flow rate again in order to hold the differential pressure (P1 - P2) constant. The differential pressure (P1 - P2) across the expansion valve 1 is always held at a constant value solely dependent on the value of the supplied electric current i.

If the expansion valve 1 is configured such that the effective pressure-receiving areas A and B become equal, the left side of the equation (1) becomes equal to zero. Then, there is obtained the following equation:

$$fs = f(i) \qquad (3)$$

Here, assuming that a set value (initial value) of the urging force of the compression coil spring 49 is fs0, a spring constant is Ks, and the lift amount of each valve portion from the valve seat is Δx, the relationship can be expressed by the following equation:

$$fs = fs0 + Ks \cdot \Delta x \qquad (4)$$

If the equation (4) is substituted into the equation (3), and rearranged with respect to Δx, the following equation is obtained:

$$\Delta x = (f(i) - fs0)/Ks \qquad (5)$$

On the right side of this equation (5), the parameters other than the electromagnetic force f(i) are fixed values, and hence the valve lift becomes a constant value proportional to the electric current i supplied to the solenoid coil 43. That is, the expansion valve 1 is configured as a proportional valve.

The expansion valve 1 of the first embodiment provides the same advantageous effects, even if refrigerant flows in the opposite direction. That is, the expansion valve 1 e.g. functions as a bidirectional expansion valve.

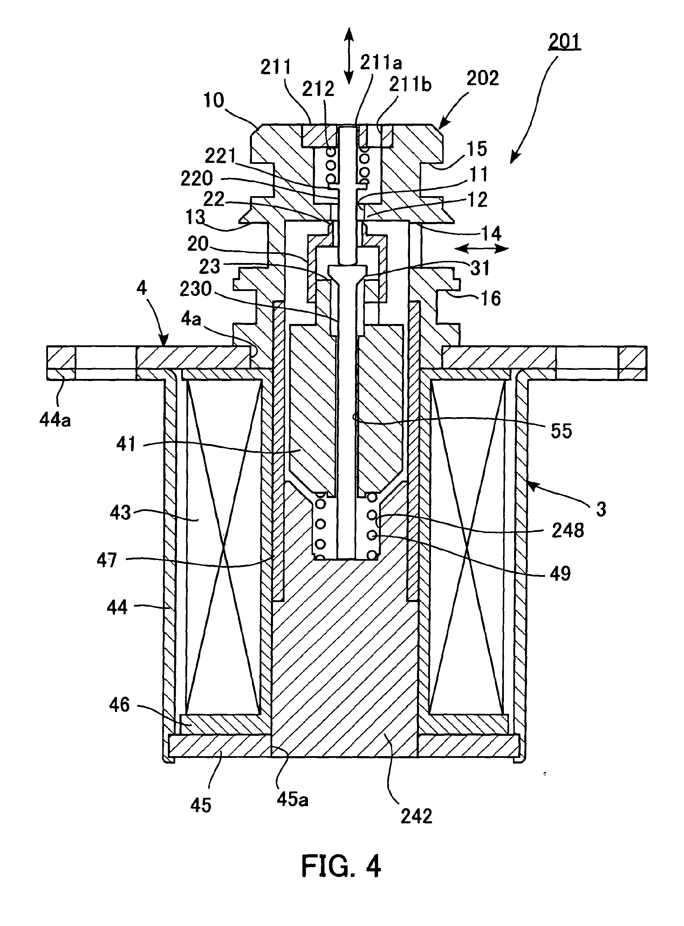

In the expansion valve 201 in Fig. 4, the axial fitting blind hole 42a of Fig. 2, is dispensed within the accommodating groove or blind hole 248 of the fixed core 242. The end of the shaft-like member 230 opposite to the valve seat 31 abuts on the bottom of the accommodating blind hole 248.

The valve main body 202 includes a long urging member 220 at which with an end face of the shaft-like member 230 at the side of the valve seat 31 will abut. A disk-shaped stopper 211 is press-fitted into an opening in the upper open end of the body 10. The stopper 211 has an axial central insertion hole 211a and refrigerant communication holes 211 b in parallel to the insertion hole 211 a. The urging member 220 has a radial flange 221 at an axially central portion. The upper end of the urging member 220 is inserted into the insertion hole 211 a. Between the stopper 211 and the urging member 220 is interposed a compression coil spring 212 for urging the urging member 220 toward the shaft-like member 230. Although the shaft-like member 230 is axially captured by abutment with the urging member 220 and the core 242, respectively, for being axially restricted in motion, the shaft-like member 230 can be displaced by a predetermined amount in a direction perpendicular to the axial direction, since there is a clearance between the member 230 and the wall of the insertion hole 55 of the plunger 41.

The sizes and the shapes of the respective valve portions and the valve seats are set and configured such that the flow passage cross-section formed by the gap between the valve portion 22 and the valve seat 12, and between the valve portion 23 and the valve seat 31 have approximately the same size when the expansion valve is open.

Also in the expansion valve 201 the valve portions 22 and 23 move approximately simultaneously to and away from the respective valve seats 12 and 31. The expansion valve 201 as well functions as a bidirectional expansion valve.

Since the shaft-like member 230 can be displaced radially by a predetermined amount, e.g. even if there are small machining errors or assembling errors in either of the valve element 20 and the plunger 41, causing displacement of the respective axes of the two valve portions 22 and 23 from each other, the shaft-like member 230 operates such that the valve portion 23 is properly seated on the valve seat 31.

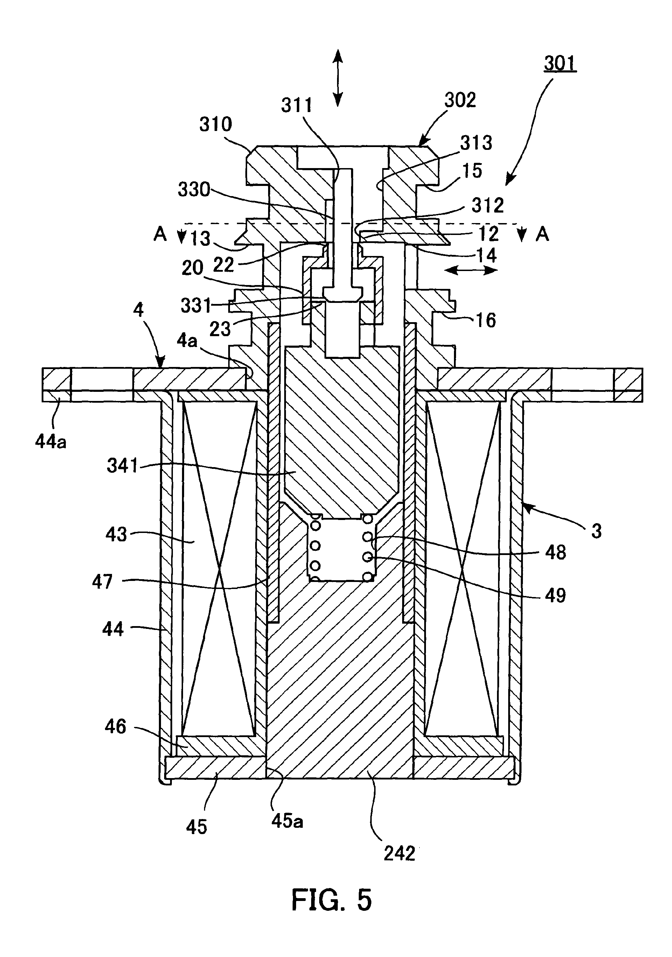

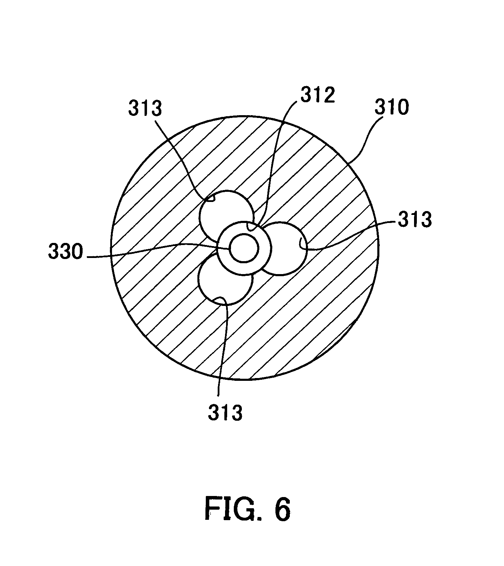

In the expansion valve 301 in Figs 5 and 6, the plunger 341 does not have the insertion hole 55 of in Fig. 2, but is solid.

The lower end of the shaft-like member 330 is a flanged portion having a tapered shape the outer diameter of which decreases toward its foremost end. The tapered portion forms the valve seat 331 for the valve portion 23. The shaft-like member 330 extends through the valve portion 22, and through a valve hole 312 defining the valve seat 12 for the valve portion 22. The other end of the shaft-like member 330 is rigidly fitted by press-fitting in an axial fitting hole 311 of body 310 of the valve main body 302.

The body 310 in Fig. 6 has three axial communication holes 313 around the shaft-like member 330 for communication with the valve hole 312.

Also in the third embodiment the sizes and the shapes of the respective valve portions and the valve seats are set and configured such that the flow passage cross-sections formed by gaps between the valve portion 22 and the valve seat 12, and between the valve portion 23 and the valve seat 331 have approximately the same sizes when the expansion valve is open.

The valve portions 22 and 23 simultaneously move to and away from the valve seats 12 and 31. The expansion valve 301 functions as a bidirectional expansion valve.

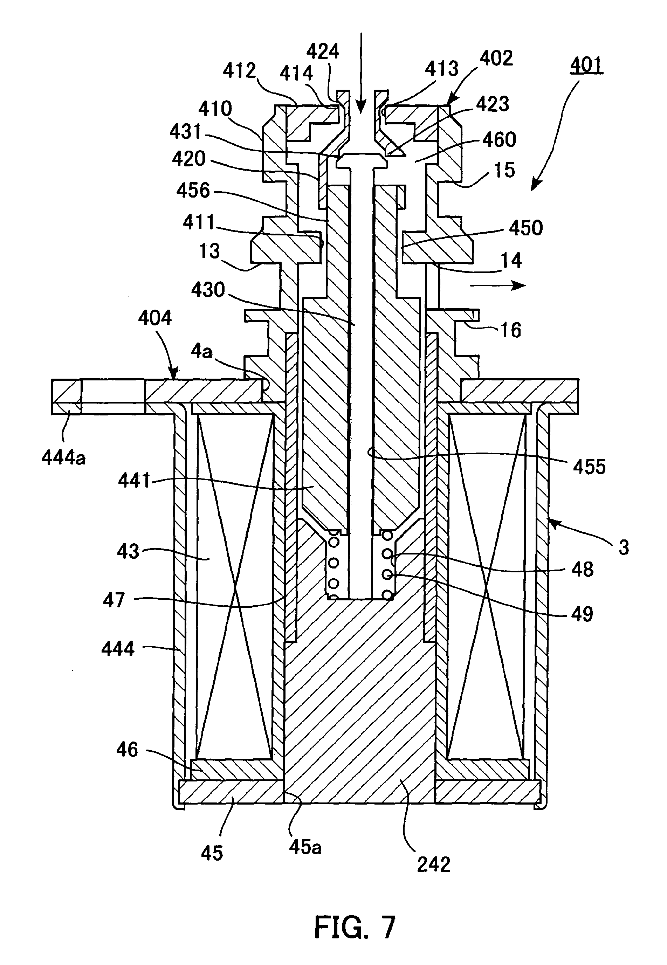

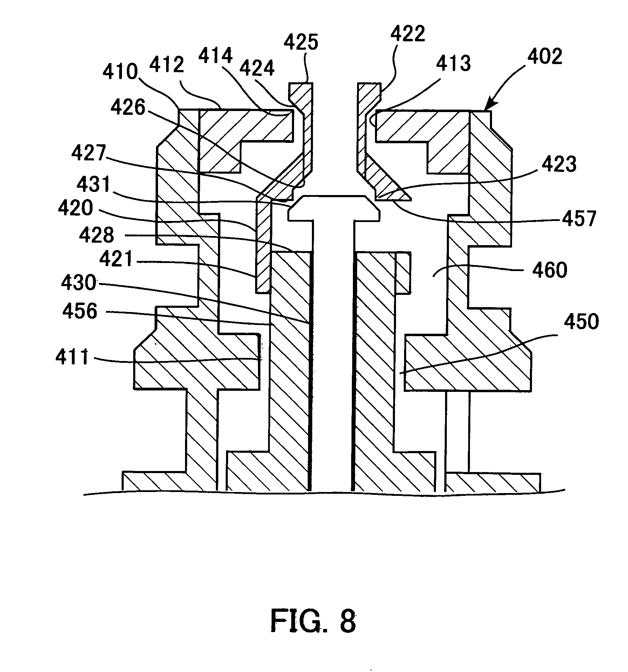

In the expansion valve 401 in Figs 7, 8, a restriction passage 450 having a narrowed and fixed flow passage cross-section is formed within a body 410 of a valve main body 402. More specifically, an inwardly flanged portion 411 is formed at a location close to the centre of the body 410 in the axial direction. The restriction passage 450 is formed by a gap between a circular hole defined by the flanged portion 411 and a valve element-forming portion 456 of the plunger 441, extending through the circular hole.

Further, a long shaft-like member 430 is inserted with a predetermined clearance through an axial insertion hole 455 of a plunger 441. A valve element 420 is fixed to the valve element-forming portion 456 by press-fitting such that the valve element 420 covers a valve seat 431 formed at a foremost end of the member 430. A disk-shaped stopper 412 is press-fitted into an opening formed in an upper end of the body 410. The foremost end of the valve element 420 is inserted into an axial valve hole 413 in the centre of the stopper 412.

The valve element 420 in Fig. 8 is formed by fitting a hollow cylindrical second member 422 into the foremost end of a hollow cylindrical first member 421 which in turn is press-fitted on the valve element-forming portion 456. The first member 421 includes a hollow cylindrical body having an inner diameter approximately equal to the outer diameter of the valve element-forming portion 456. An upper end of the body remote from the valve element-forming portion 456 has a tapered shape with the outer diameter decreasing toward the foremost end. The tapered portion has a valve portion 423 formed at an inner periphery of a root portion in a manner protruding radially inward. An upper end of the second member 422, remote from the first member 421, extends through the valve hole 413 of the stopper 412 and forms a refrigerant passage by a gap between the second member 422 and the stopper 412. The foremost end of the second member 422 again has a tapered portion the outer diameter of which increases toward the cylindrical foremost end and which forms a valve portion 424. A side wall of the first member 421 contains a communication hole 457 between the inside and the outside of the expansion valve 401. The shaft-like member 430 with the valve seat 431 is set to a location in an axial relation to the valve element 420, such that the two valve portions 424 and 423 will simultaneously be seated on the respective valve seats 414 and 431. The effective pressure-receiving area of the valve portion 424 seated on the valve seat 414 (i.e. the flow passage cross-sectional area of the valve hole 413), and the effective pressure-receiving area of the valve portion 423 seated on the valve seat 431 (i.e. the flow passage cross-sectional area surrounded by the opening rim of the valve portion 423) are equal.

The valve element 420 is designed with a pressure-cancelling structure. More specifically, a valve-closing pressure-receiving surface for the pressure of high-pressure refrigerant introduced into the valve element 420 from upstream is defined by an end face 425 of the second member 422. A a valve-opening pressure-receiving surface for the pressure of the high-pressure refrigerant is defined by a tapered surface 426 inside the junction of the first member 421 and the second member 422. A further valve-opening pressure-receiving surface for receiving the pressure of refrigerant decompressed by passing through the valve portion 423 is defined by a downstream facing surface 427 in the vicinity of the valve portion 423 of the first member 421. A valve-closing pressure-receiving surface for the pressure of the decompressed refrigerant is defined by an end face 428 of the valve element-forming portion 456. All in order to cancel a part of the forces generated by the pressure of the refrigerant applied to the valve element 420.

In the stopper 412 the valve seat 414 is formed by an opening rim of the open end defining the valve hole 413 and such that the valve portion 423 can be removably seated on the valve seat 414. Further, a lower end-side inner periphery of the stopper 412 is expanded in diameter such that a refrigerant passage is formed between the stopper 412 and the tapered portion of the first member 421.

The sizes and the shapes of the valve portions and the valve seats are set and configured such that flow passage cross-sections formed by gaps between the valve portion 424 and the valve seat 414, and between the valve portion 423 and the valve seat 431 have approximately the same sizes when the expansion valve is open.

When, in Fig. 8, the solenoid coil 43 is de-energized, the plunger 441 is urged upstream by the compression coil spring 49. The valve portions 424 and 423 are away from the valve seats 414 and 431. The expansion valve 401 is open.

When an electric current i is supplied to the solenoid coil 43, an electromagnetic force with a magnitude dependent on the value of the electric current attracts the plunger 441 to the core 242. A force acts in a direction in which the valve element 420 is seated against the urging force of the compression coil spring 49. The valve element 420 will stop at a certain location when the electromagnetic force and the load of the compression coil spring 49 are balanced. The predetermined flow passage cross-sections are formed between the valve portions and the valve seats.

High-pressure refrigerant introduced from upstream passes through the gaps between the valve portion 424 and the valve seat 414, and between the valve portion 423 and the valve seat 431 to be decompressed by the passage, and flows downstream. The refrigerant undergoes adiabatic expansion by passing through the restriction passage 450 (Fig. 7), to be delivered downstream of the refrigerant passage 71 through the communication hole 14. A part of the forces of the pressure applied to the valve element 420 and further to the plunger 441 is cancelled by the pressure-cancelling structure.

Assumption: the inlet pressure of the refrigerant introduced from upstream is P1. The pressure in an intermediate region 460 where the refrigerant is decompressed by passing through the gaps between the valve portions and valve seats, is P2. The outlet pressure of the refrigerant further decompressed by passing through the restriction passage 450 is P3. The effective pressure-receiving area of the valve portion 424 seated on the valve seat 414 (i.e. the flow passage cross-sectional area of the valve hole 413) is A. The effective pressure-receiving area of the valve portion 423 seated on the valve seat 431 (i.e. the flow passage cross-sectional area surrounded by the opening rim of the valve portion 423) is B. The flow passage cross-sectional area of the restriction passage 450 is C. Then the flow rate Gf through the expansion valve 401 can be expressed by the following equation:

$$Gf = KC\,(P2 - P3) \qquad (6)$$

(K designates a flow rate coefficient).

For forces acting on the valve element 420 and the plunger 441, it is assumed that the electromagnetic force generated by the electric current i by f(i). The load of the compression coil spring 49 in upstream direction is fs. The flow passage cross-sectional areas in the gaps between the valve portions and the valve seats are s(i). The cross-sectional area of the valve element-forming portion 456 is D. Then the relationship between forces in upward and downward directions can be expressed by the following equations:

$$((A - s(i)) - (B - s(i))) \times (P1 - P2) + D(P2 - P3)$$

$$= fs - f(i) \qquad (7)$$

If the fact that A = B holds in the present embodiment from the equations (6) and (7), the flow rate Gf can be calculated by the following equation:

$$Gf = (KC/D) \times (fs - f(i)) \qquad (8)$$

That is that the influence of the flow passage cross-sectional area s(i) which varies with the electric current i is eliminated. Further, on the right side of the equation (8), the parameters other than the electromagnetic force f(i) are substantially fixed values, and the differential pressure across the restriction passage 450 is held constant, based on the same principle as described above in the first embodiment, and hence the flow rate Gf is obtained as a constant flow rate proportional to the value of electric current i. In short, the expansion valve 401 operates as a flow regulating valve.

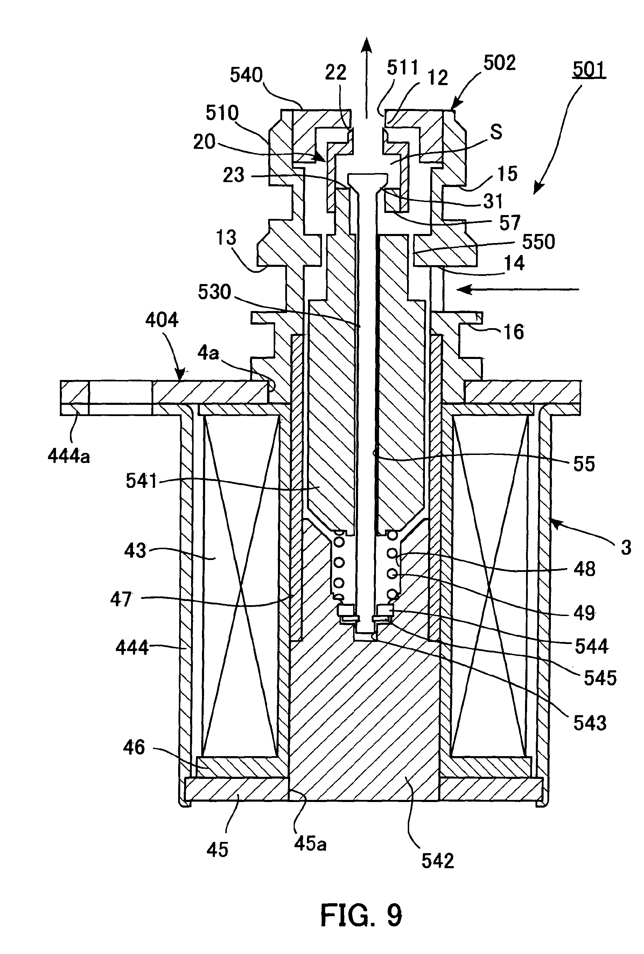

In the expansion valve 501 of Fig. 9 refrigerant flows in a direction opposite to the direction in which refrigerant flows in the fourth embodiment. A restriction passage 550 is disposed upstream of the valve element 20. A disk-shaped stopper 540 is press-fitted into an opening in an upper end of a body 510 of a valve main body 502. A valve hole 511 is axially formed through the centre of the stopper 540. The valve seat 12 on which the valve portion 22 on the foremost end of the valve element 20 can be removably seated is formed by the peripheral edge of the opening of the valve hole 511.

The bottom of the accommodating blind hole or groove 48 of a core 542 has a stepped groove or blind hole 543 the diameter of which decreases stepwise in a direction away from a plunger 541. An annular stopper member 544 is fitted into an upper end of the stepped groove 543. A C-ring 545 is fitted onto a lower end of a shaft-like member 530 to restrict the upward movement of the shaft-like member 530 at the C-ring 545. On the shaft-like member 530, the valve seat 31 is set to a location relative to the valve element 20 such that the two valve portions 22 and 23 will simultaneously be seated on the valve seats 12 and 31.

When the valve element 20 is in an open position, refrigerant from upstream of the refrigerant passage 71 undergoes adiabatic expansion when passing through the restriction passage 550, and then is further decompressed through the gap between the valve portion 23 and the valve seat 31 and the gap between the valve portion 22 and the valve seat 12, to be delivered downstream.

The sizes and the shapes of the valve portions and the valve seats are set and configured such that flow passage cross-sections formed by gaps between the valve portion 22 and the valve seat 12, and between the valve portion 23 and the valve seat 31 have approximately the same sizes when the expansion valve is open.

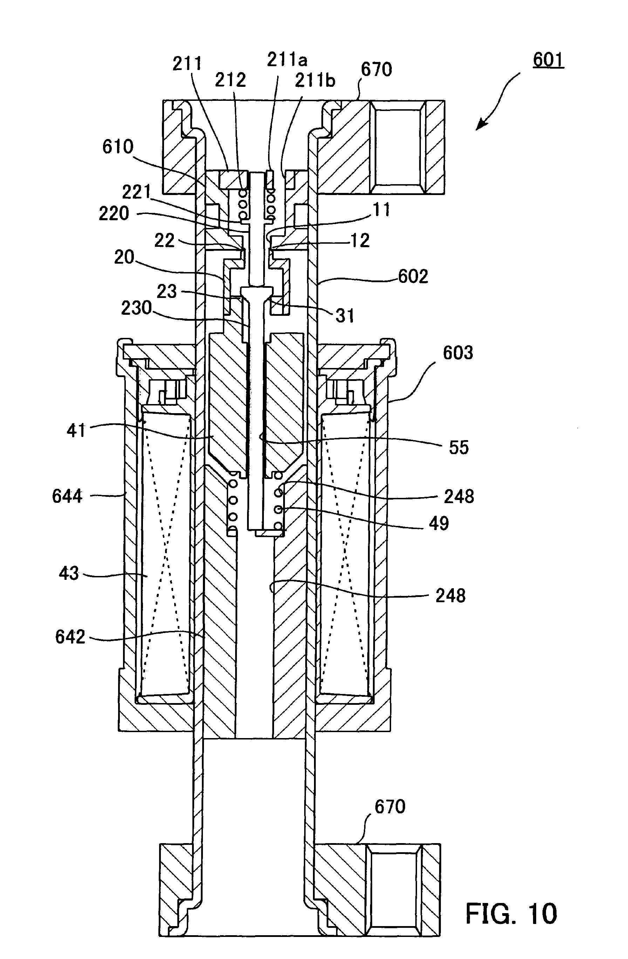

The sixth embodiment in Fig. 10 is a pipe-integrated expansion valve to be connected to an intermediate portion of piping of a refrigeration cycle. Components, such as a valve element and the like, are approximately the same as in the second embodiment.

The expansion valve 601 in Fig. 10 has a body 602 constructed by a hollow cylindrical pipe with opens ends. The body 602 contains a plunger 41. The valve element 20 is fixed to the plunger 41. Further components are a core 642, a shaft-like member 230, the urging member 220, and a stopper 610. The solenoid coil 43, a hollow cylindrical yoke 644, and so forth, which form a solenoid 603, surround the body 602. With the shaft-like member 230, the valve seat 31 is set at a location relative to the valve element 20 such that the two valve portions 22 and 23 will simultaneously be seated on the valve seats 12 and 31.

The sizes and the shapes of the valve portions and the valve seats are set and configured such that flow passage cross-sections formed by gaps between the valve portion 22 and between the valve portion 23 and the valve seat 31 have approximately the same sizes when the expansion valve is open.

Although in the first to fifth embodiments, the body of each expansion valve is directly fixed to the piping body 70, this is not limitative. Instead the expansion valve may be provided with a casing or the like for accommodating the body, and the casing or the like may be connected to the piping.

Further, although in each of the above embodiments, the valve portion and the valve element are each formed by two stages, this is not limitative. The valve portion and the valve element instead may be formed by two or more stages, provided that at least a part of the influence of fluid pressure on the valve portions, caused by variations of the effective pressure-receiving area in the lifted state of each valve portion, can be cancelled.

In the second embodiment, the shaft-like member 230 and the urging member 220 need not be separate members, but may be integrally formed. Provided that a predetermined clearance is provided in advance between the insertion hole 211 a of the stopper 211 and the urging member 220, the shaft-like member 230 operates such that the valve portion 23 will always be properly seated on the valve seat 31.

The invention can also be applied to any control valves similarly as long as they serve as control valves for variable displacement compressors or as other control valves for controlling the flow rate of refrigerant. Further, the invention can be applied also to any control valves so long as they are fluid control valves for adjusting the flow rate of fluid introduced from upstream to allow the fluid to be delivered downstream, e.g. to control valves e.g. for hot water supply systems.

Furthermore, although the valve element is electromagnetically actuated by the solenoid in the embodiments, the invention can also be applied to so-called mechanical type fluid control valves in which the valve element is actuated by an internal mechanical constitution including a spring, and the pressure of the respective fluid.

**Claims**

1. A fluid control valve for adjusting the flow rate of fluid introduced from upstream and for delivering the fluid downstream, comprising:

    a body (10, 310, 410, 510) having a fluid flow passage **characterised by**;

    first and second valve seats (12, 31 331, 414, 431) in the body along the flow passage;

    a valve element (20, 420) having integrally formed first and second valve portions (22, 23, 423, 424), the first and second valve portions being movable at least approximately simultaneously to and away from the respective first valve seat second valve seats, the valve element being movable forward and backward within the body while being supported therein, to thereby adjust the flow rate of the fluid to be delivered downstream according to a lift amount of each valve portion from the associated valve seat; and

    a pressure-cancelling structure including

a valve-opening pressure-receiving surface for receiving a pressure of the fluid acting on the valve element in valve-opening direction, and

a valve-closing pressure-receiving surface for receiving a pressure of the fluid acting on the valve element in valve-closing direction, the pressure-cancelling structure cancelling at least a part of the forces resulting from the pressure of the fluid acting on the valve element.

2. The fluid control valve according to claim 1, **characterised by** a solenoid (3, 603) including a fixed core (42, 242, 542), a plunger (41, 341, 441, 541) to which the valve element is fixed for moving forward and backward in unison within the body, and a solenoid coil (43) for generating a magnetic circuit including the plunger and the core by externally supplied electric current, and a configuration of the fluid control valve as a solenoid valve for controlling the lift amount of the valve element according to a value of electric current supplied to the solenoid coil, and for adjusting the fluid flow rate from upstream to downstream.

3. The fluid control valve according to claim 2, **characterised in that** flow passage cross-sections formed by gaps between the first valve portion and the first valve seat, and between the second valve portion and the second valve seat are configured to have approximately the same sizes when the fluid control valve is open.

4. The fluid control valve according to claim 3, **characterised in that** the valve element includes a body having an introduction passage (20a) for introducing the fluid, a delivery passage (20b) for delivering the fluid, and an expanded pipe portion (S) provided between the introduction and delivery passages, and that one of the first and second valve portions is formed by an end of the body facing toward the introduction passage or the delivery passage, while the other of the first and second valve portions is formed by a stepped portion of the expanded pipe portion facing toward the introduction passage or the delivery passage, and that one of the first and second valve seats is formed by a stepped portion formed within the body, while the other of the first and second valve seats is formed by a portion of a shaft-like member (30, 230, 330, 430, 530) partially inserted into the expanded pipe portion.

5. The fluid control valve according to claim 4, **characterised in that** the shaft-like member (30, 230, 330; 430, 530) is inserted with a predetermined radial clearance into an insertion hole (55, 455) of the plunger (41, 341, 441, 541) and the end of the shaft-like member remote from the second valve seat (31, 331, 431) is axially supported by the core (42, 242, 542, 642).

6. The fluid control valve according to claim 5, **characterised by**:

an urging member (220) supported within the body and capable of being brought into abutment with the shaft-like member (230) from the side remote from the core (242); and

urging means (212) for urging the urging member (220) toward the core (242), and

a configuration of the shaft-like member (230) to have its axially opposite ends in abutment with the urging member (220) and the core (242), respectively, for restricting axial motions of the shaft-like member, while allowing movements by a predetermined amount in axial directions perpendicular to the axial direction.

7. The fluid control valve according to claim 3, **characterised in that** effective pressure-receiving areas of the first and second valve portions (22, 23, 423, 424) are equal when the fluid control valve is closed, whereby the fluid control valve functions as a proportional control valve in which a valve opening degree thereof becomes equal to a value proportional to a value of the electric current supplied to the solenoid coil (43).

8. The fluid control valve according to claim 3, **characterised in that** an effective pressure-receiving areas of the first and second valve portions (22, 23, 423, 424) are different from each other when the fluid control valve is closed, whereby the fluid control valve functions as a differential pressure valve in which differential pressure across the fluid control valve becomes equal to a fixed value dependent on a value of electric current supplied to the solenoid coil (43).

9. The fluid control valve according to claim 3, **characterised in that** a restriction passage (450, 550) defining a constant flow passage cross-section is provided on an upstream side or a downstream side of the valve element (420), whereby the fluid control valve functions as a constant flow rate valve in which a flow rate of fluid delivered downstream becomes equal to a fixed value dependent on a value of electric current supplied to the solenoid coil (43).

10. The fluid control valve according to claim 3, **characterised in that** the fluid control valve functions as a bidirectional control valve.

FIG. 1

FIG. 2

FIG. 3

FIG. 4

FIG. 5

FIG. 6

FIG. 7

FIG. 8

FIG. 9

FIG. 10